# EUROPÄISCHE PATENTSCHRIFT

(11) **EP 1 537 721 B1**
(45) Veröffentlichungstag und Bekanntmachung des Hinweises auf die Patenterteilung: **25.04.2007**
(21) Anmeldenummer: 03797153.8
(22) Anmeldetag: 04.06.2003
(51) Int. Cl.: H04L 29/12, G06F 13/362

(54) **BUS**
BUS
BUS

(30) Priorität: 04.09.2002 DE 10240832
(43) Veröffentlichungstag der Anmeldung: 08.06.2005
(73) Patentinhaber: ROBERT BOSCH GMBH, 70442 Stuttgart (DE)
(72) Erfinder: SCHNEIDER, Burkhard, 71549 Auenwald (DE)
(86) Internationale Anmeldenummer: PCT/DE2003/001850
(87) Internationale Veröffentlichungsnummer: WO 2004/028115

(56) Entgegenhaltungen:
- EP-A- 0 485 878
- EP-A- 0 493 905
- DE-A- 4 428 502
- DE-A- 19 621 272
- US-A- 4 638 313

## Beschreibung

### Stand der Technik

Die Erfindung geht aus von einem Bus nach der Gattung des unabhängigen Patentanspruchs.

Aus der Europäischen Patentschrift EP 485 878 B1 ist ein Bus bekannt, bei dem über T-Schalter parallel verzweigte Slave-Einheiten in einem Master-Slave-Bus angeschlossen sind, die jeweils eine eigene Seriennummer aufweisen, um in einer Initialisierungsphase anhand dieser Seriennummer durch den Master erkannt werden zu können. Dies führt der Master dadurch durch, dass er die gesamte Seriennummer der jeweiligen Slaveeinheiten identifiziert. Ist die Identifizierung jeweils durchgeführt, dann weist der Master dem jeweiligen Slave eine Kommunikationsadresse zu.

Nachteilig an der in EP 484 878 B 1 vorgestellten Lösung ist, dass die gesamte Seriennummer zur Zuweisung der Kommunikationsadresse ermittelt werden muss. Dies bedeutet einen erheblichen Aufwand bei der Initialisierung.

Aus der EP 0 493 905 A1 ist ein Verfahren und eine Vorrichtung zur Identifizierung von Nebenstationen bekannt, wobei aus der Seriennummer jeder Nebenstation eine CRC-16-Nummer berechnet wird, die von einem Master zur Adressvergabe verwendet wird. Die deutsche Offenlegungsschrift DE 44 28 502 A1 offenbart ein Bussystem mit einem Busmaster und mehreren Teilnehmern. Aus der deutschen Offenlegungsschrift DE 196 21 272 A1 ist eine Adressierungsvorrichtung für eine Nebenstation eines seriellen Bussystems bekannt. Die US 4,638,313 offenbart ein Verfahren zur dynamischen Zuordnung von Adressen zu neuen Modulen, wenn diese mit einem Kommunikationssystem gekoppelt werden.

Aufgabe der Erfindung ist es, eine einfachere Identifikation der einzelnen Slaves durch den Master zu ermöglichen, um die Adressen für die Kommunikation über den Bus zuweisen zu können.

### Vorteile der Erfindung

Der erfindungsgemäße Bus mit den Merkmalen des unabhängigen Patentanspruchs hat den Vorteil, dass durch die Identifikation der einzelnen Slaves anhand der Seriennummer durch die Identifikation eines Teilmerkmals der Seriennummer eine schnellere Isolierung der einzelnen Slaves und damit Zuweisung der Kommunikationsadresse möglich ist. Die gesamte Seriennummer muss nun nicht mehr abgefragt werden. Dies reduziert den zeitlichen Aufwand und die Rechenleistung für die Initialisierungsphase erheblich. Die Suchzeiten der einzelnen Seriennummern werden dadurch erheblich verkürzt.

Durch die in den abhängigen Ansprüchen aufgeführten Maßnahmen und Weiterbildungen sind vorteilhafte Verbesserungen des im unabhängigen Patentanspruch angegebenen Busses möglich.

Besonders vorteilhaft ist, dass der wenigstens eine Slave einen Schalter aufweist, den der wenigstens eine Slave nach der erfolgten Adressierung durchschaltet. Damit ist es möglich, dass die Slaves, die diesem Slave nachgeschaltet sind, entweder in einer Daisy-Chain-Struktur, also in einer seriellen Busverbindung, oder mittels einer T-Tapping-Struktur, also einer Parallelverbindung, erst sichtbar werden, wenn der vorgeschaltete Slave beispielsweise ein Melder, die Kommunikationsadresse erhalten hat. Der Schalter ist vorzugsweise als ein elektronischer Schalter ausgebildet, vor allem als ein Transistor, insbesondere ein sog. FET-Schalter.

Weiterhin ist es von Vorteil, dass der Master derart konfiguriert ist, dass der Master als das wenigstens eine Teilmerkmal eine Zahl in der jeweiligen Seriennummer identifiziert. Beispielsweise kann überprüft werden, ob die Zahl 5, binär 101, in einer typischerweise 4 Byte langen Adresse angegeben ist. Ist das der Fall, dann antwortet dieser Slave auf die Frage des Masters und der Master kann diesem Slave eine Kommunikationsadresse zuweisen, sofern kein anderer Slave, der ebenfalls diese Frage von dem Master gehört hat, eine 5 in seiner Seriennummer aufweist. Die Verwendung von Teilmerkmalen hat, wie oben dargestellt, den besonderen Vorteil, dass die Abfragen kürzer sein können, als wenn die ganze Seriennummer abgefragt werden muss.

Darüber hinaus ist es von Vorteil, dass der Master derart konfiguriert ist, dass der Master nur diejenige Adresse an den jeweiligen Slave vergibt, wenn bei einer Frage des Masters nach dem wenigstens einen Teilmerkmal nur ein Slave antwortet. D.h. antwortet kein Slave oder antworten mehrere Slaves auf diese Frage, dann muss der Master eine neue Frage stellen, um die einzelnen Slaves voneinander zu isolieren.

Die Größe des wenigstens einen Teilmerkmals, das vom Master bei den Slaves abgefragt wird, kann zwischen 1 Bit und 4 Byte liegen. Beispielsweise ist es zunächst möglich, dass der Master nur nach einer Null oder einer Eins fragt, wenn ein serieller Bus angeschlossen ist, bei dem nur ein Slave den Master hören kann. In diesem Fall kann durch eine vorgegebene Fragestrategie der Aufwand der Adressierung erheblich reduziert werden. Nur wenn mehrere Slaves antworten, kann der Master dann eine Frage nach einem Teilmerkmal stellen, das eine größere Breite hat, beispielsweise drei oder vier Bit. Dies kann dann so weit gehen, je nach dem, wie viele Slaves parallel geschaltet sind, dass vier Byte abgefragt werden.

Nach der erfolgten Adressierung der Slaves ist es vorteilhafter Weise möglich, dass der Master von den einzelnen Slaves nun die Seriennummern ausliest, um bei einem Absturz des Bussystems oder einer Unterbrechung des Bussystems über die bekannten Seriennummern die Adressierung bei einem Neustart schneller durchführen zu können. Dafür speichert dann der Master diese Seriennummer in einem Speicher in seinem Gehäuse ab.

### Zeichnung

Ausführungsbeispiele der Erfindung sind in der Zeichnung dargestellt und werden in der nachfolgenden Beschreibung näher erläutert.

Es zeigen
- Figur 1: ein erstes Blockschaltbild des erfindungsgemäßen Busses,
- Figur 2: ein zweites Blockschaltbild des erfindungsgemäßen Busses und
- Figur 3: ein Flussdiagramm über die erfindungsgemäße Adressierung der einzelnen Slaves durch den Master.

### Beschreibung

Bei dem bekannten lokalen Sicherheitsnetzwerk (LSN) ist ein digitales bidirektionales Übertragungssystem nach dem Master-Slave-Prinzip vorgesehen. Der Master bildet dabei die Zentrale. Die Slaves, die bis zu 127 Stück sein können, sind die Netzelemente bei den Sensorenanzeigeinheiten und Eingabestellen.

Die Initialisierung dient zur Übermittlung der Adresse unter der das adressierbare Element, also der Slave, in der Folgezeit erreichbar ist. Hierzu wird dem adressierbaren Slave nach Anlegen der Versorgungsspannung seine Adresse, gefolgt von einem geraden Paritätsbit und einem Stopbit gesendet.

Eine erfolgreiche Initialisierung wird vom adressierten Element durch Zurücksenden von Startbit, Adresse und ungeradem Paritätsbit beantwortet und anschließend wird der FET-Schalter im Slave geschlossen. Soll der FET-Schalter nicht geschlossen werden, zum Beispiel, um eine Störungsstelle zu isolieren, so muss in der Adresse das MSB (Most Signifikant Bit) gesetzt werden. Dieses Bit ist bei einer Anzahl von 128 Slaves sonst immer Null.

Alle LSN-Elemente sind als Stich oder Ring in Reihe geschaltet. Nach Anlegen der Versorgungsspannung sind zunächst die Schalter in den Slaves geöffnet.

Von der Zentrale ist also zunächst nur ein Slave sichtbar. Dieser bekommt die Kommunikationsadresse 01. Anschließend wird der Schalter in diesem ersten Slave geschlossen, und es kann nun ein weiteres Element adressiert werden. Dieser Vorgang wird wiederholt, bis alle Elemente eine Kommunikationsadresse zugewiesen bekommen haben.

Das LSN soll nun unter anderem T-Tapping-fähig gemacht werden, d.h. neben der bisherigen Reihen- oder Serienschaltung aller Slaves soll die Möglichkeit geschaffen werden, Slaves parallel am LSN-Bus anzuschließen. Dabei kann ein seriell angeschlossener Melder wie bisher adressiert werden. Nach Durchschalten des Schalters können aber danach parallel geschaltete Melder mit dem bisherigen Verfahren nicht mehr adressiert werden.

Erfindungsgemäß wird daher ein Bussystem vorgeschlagen, das die Identifikation von solchen parallel geschalteten Meldern in einer Mischung aus seriell und parallel geschaltetem Bus ermöglicht. Der erfindungsgemäße Bus ist jedoch auch bei einem rein seriellen Bus anwendbar und kann hier zu Effizienzsteigerungen führen.

Alle Melder erhalten zur Unterscheidung eine individuelle Seriennummer, die beispielsweise vier Byte lang ist. Die Melder können jetzt unter ihrer Seriennummer adressiert werden. Von der Zentrale könnte der Befehl "Vergebe Kommunikationsadresse 02" an die Seriennummer 10111101 gesendet werden. Sind die Seriennummern jedoch unbekannt, ist es zeitlich nicht möglich, alle vorhandenen Kombinationen durchzuprobieren. Alle Slaves, denen noch keine Adresse zugewiesen wurde, reagieren auf die Defaultadresse 00. Die Zentrale versucht durch ein gezieltes Abfragen an die Adresse 00, individuelle Merkmale der vorhandenen Seriennummer zu finden und so die Slaves zu isolieren. Damit wird ausgedrückt, dass dem einzelnen Slave in dieser Weise jeweils eine eigene Kommunikationsadresse zugewiesen werden kann, indem ein Teilmerkmal identifiziert wird, auf das nur der eine jeweilige Slave antwortet. Die Zentrale sendet als Master beliebige Abfragemasken. Die Breite dieser Abfragemaske kann zwischen einem und vier Byte liegen. In den Slaves wird das Ergebnis der letzten Abfrage gespeichert, beispielsweise Antwort auf letzte Frage oder keine Antwort auf letzte Frage.

Die Zentrale wertet die Anzahl der Antworten aus. Dabei gibt es drei Möglichkeiten:
1. Es antwortet kein Element
2. Es antwortet ein Slave
3. Es antworten mehrere Slaves

Antwortet nur ein Slave, so vergibt die Zentrale an diesen Slave eine Kommunikationsadresse. Von der Zentrale wird der Befehl "Kommunikationsadresse 02" an den Slave, der auf die letzte Frage geantwortet hatte, gesendet. Dies ermittelt der Slave dadurch, dass er die letzte Antwort bei sich abspeichert. Damit erkennt der Slave, der als einzelner einziger geantwortet hat, dass er diese Adresse bekommen soll. Dieser Slave nimmt ab jetzt nicht mehr an dem Adressierungsverfahren teil. Antworten kein oder mehrere Slaves, wird die Abfrage verfeinert. Die Verfeinerung wird dadurch erreicht, dass die Größe des Teilmerkmals vergrößert wird. Beispielsweise wird zunächst nur 1 Bit abgefragt. Antworten mehrere Slaves auf diese Frage, dann wird auf 2 Bit erhöht, und so fort.

Drei Slaves haben beispielsweise die Seriennummer:
Melder 2 = 10101011 (0XAB)
Melder 3 = 10010101 (0X95)
Melder 4 = 01100101 (0X65)

Die Seriennummern sind hier binär und hexadezimal angegeben. Eine mögliche Abfrage durch den Master oder die Zentrale wäre das letzte Byte der Seriennummer. Die Zentrale sendet beispielsweise die Abfrage an die Adresse 00 "gibt es einen Slave, dessen letztes Byte eine 2 enthält?"

Im Folgenden wird für die oben genannten drei Melder als die Slaves die Abfrage durch die Zentrale und die entsprechende Antwort der entsprechenden Melder dargestellt:

| Abfrage durch Zentrale | Antwort von Melder |
|---|---|
| 0 | -- |
| 1 | -- |
| 2 | -- |
| 3 | -- |
| 4 | -- |
| 5 | 3 und 4 |
| 6 | 4 → Melder 4 erhält Adresse "02" |
| 7 | -- |
| 8 | -- |
| 9 | 3 → Melder 3 erhält Adresse "03" |
| A | 2 → Melder 2 erhält Adresse "04" |

Sind alle Slaves gefunden, so werden die Schalter der neu gefundenen Slaves einzeln geschaltet und die Suche wird fortgesetzt. Im Beispiel wurde zunächst der Schalter im Melder 3 geschaltet. Es werden jedoch keine weiteren Melder gefunden. Die Suche wird dann mit dem Melder 2 fortgesetzt.

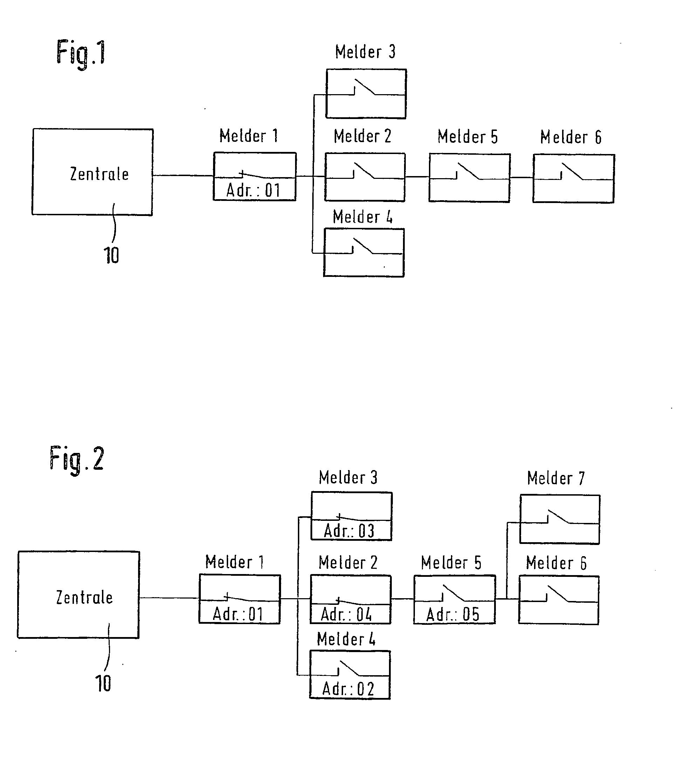

Figur 1 zeigt als ein Beispiel eine mögliche Konfiguration eines erfindungsgemäßen Busses. Eine Zentrale 10 als Busmaster ist mit einem Melder 1, der einen Schalter wie alle anderen Slaves aufweist, zum Durchschalten an dahinter angeschlossene Slaves verbunden. Hinter dem Melder 1 sind im sogenannten T-Tapping die Melder 2, 3 und 4 parallel geschaltet. Nur auf dem Melder 2 folgt auf ein Melder 5 und auf diesen Melder 5 ein Melder 6. Im vorliegenden Beispiel ist der Melder 1 bereits durch den Master 10 erfindungsgemäß mit der Adresse 01 adressiert worden. Darauf hin schließt der Melder 1 seinen Schalter, der als ein FET-, also als ein Transistorschalter ausgebildet ist, so dass nun die Melder 2, 3 und 4 für die Zentrale 10 sichtbar werden und adressiert werden können.

Figur 2 zeigt nun eine zweite Konfiguration des erfindungsgemäßen Busses. Hier sind nun bereits die Melder 1 bis 5 durch die Zentrale 10 adressiert worden. Gleiche Elemente sind hier mit gleichen Bezugszeichen bezeichnet. Die Zentrale 10 ist an den Melder 1 angeschlossen, an den wiederum die Melder 2, 3 und 4 angeschlossen sind. An den Melder 2 ist der Melder 5 angeschlossen, an den wiederum die Melder 6 und 7 angeschlossen sind. Die Melder 1 und 2, die bereits adressiert worden sind, haben ihre Schalter geschlossen, so dass die dahinter liegenden Melder für die Zentrale 10 zur weiteren Adressierung sichtbar sind. An die Melder 3 und 4 sind keine weiteren Melder angeschlossen, so dass hier ein Öffnen des Schalters wieder möglich ist. Der Melder 5 ist nun auch adressiert worden, so dass der Melder 5 seinen Schalter nun schließen wird, um es zu ermöglichen, dass die Melder 6 und 7 durch die Zentrale 10 adressiert werden können.

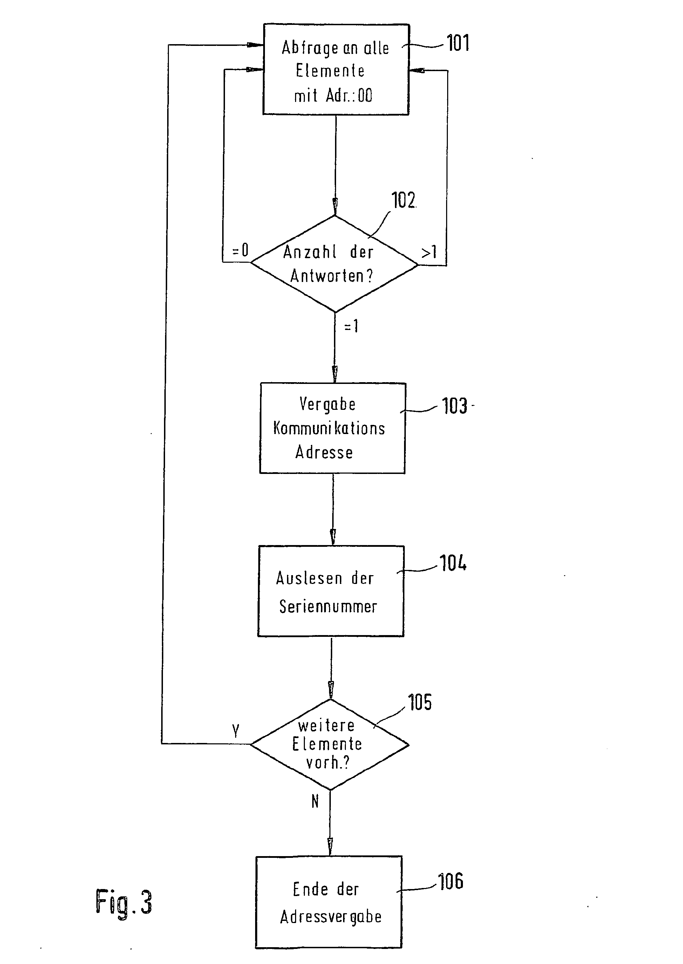

Figur 3 zeigt als ein Flussdiagramm die erfindungsgemäße Adressierung der Slaves im erfindungsgemäßen Bussystem durch den Master. In Verfahrensschritt 101 fragt die Zentrale 10 an alle direkt angeschlossenen Elemente, die die Zentrale 10 hören können, mit der Adresse 0 eine erste Abfrage, beispielsweise ob das erste Bit der Seriennummer eine 1 ist. In Verfahrensschritt 102 wertet nun die Zentrale 10 die Antworten der Slaves aus. Antwortet keiner der angeschlossenen Slaves, wird zu Verfahrensschritt 101 zurückgesprungen. Dies geschieht auch, wenn mehr als ein Slave auf die Frage antwortet, dann muss in Verfahrensschritt 101 die Suche dahingehend verfeinert werden, dass nun eine größere Zahl als Teilmerkmal abgefragt wird, um die einzelnen angeschlossenen Slaves voneinander zu isolieren.

Wurde jedoch in Verfahrensschritt 102 erkannt, dass lediglich ein Slave auf die Frage geantwortet hat, dann vergibt in Verfahrensschritt 103 die Zentrale eine Kommunikationsadresse an den antwortenden Slave. Dieser Slave erkennt, wie oben dargestellt, dies daran, dass er auf diese Frage geantwortet hat und dies in seinem Speicher abgespeichert hat. In Verfahrensschritt 104 liest nun der Master 10 von den dem adressierten Slave die Seriennummer aus, um bei einem Neustart des Busses die Adressierung schneller durchführen zu können, indem direkt die Seriennummer abgefragt wird. In Verfahrensschritt 105 überprüft der Master 10, ob noch weiteren Melder angeschlossen sind und führt dann die Verfahrensschritt ab Verfahrensschritt 101 wieder durch. Konnten in Verfahrensschritt 105 keine weiteren Slaves mehr erkannt werden, dann wird zu Verfahrensschritt 106 übergegangen und die Adressvergabe ist nunmehr beendet. Damit kann dann der Regelbetrieb des Busses aufgenommen werden. Auf die Abfrage der Zentrale 10 gibt es nun drei mögliche Antworten:
1. keine Antwort - kein Melder erfüllt die Bedingung der Abfrage
2. Antwort - ein Melder erfüllt die Bedingung der Abfrage
3. Kollision - mehrere Melder erfüllen die Bedingung der Abfrage

Entscheidend für das Verfahren ist die Unterscheidung zwischen Antwort und Kollision. Für die Unterscheidung gibt es folgende Möglichkeiten:
1.) Die Elemente senden individuelle Antworten.(Seriennummer oder Teil der Seriennummer) Dies führt bei Überlagerung von Antworttelegrammen zu ungültigen Zeichenfolgen die von der Zentrale erkannt werden.
2.) Zentralenseitige Auswertung des Antwortstromes.

Eine weitere Möglichkeit ist die sukzessive Approximation.
Die Zentrale sendet eine Abfrage an die Adresse 00 "Gibt es Elemente deren Seriennummer >= xx ist".
Melder 2 = 10101011 (0xAB)
Melder 3 = 10010101 (0x95)
Melder 4 =01100101 (0x65)

Abfrage durch Zentrale Antwort von Melder

| | |
|---|---|
| 10000000 | 2 und 3 |
| 11000000 | -- |
| 10100000 | 2 □ Melder 2 erhält Adresse "02" |
| | |
| 10000000 | 3 □ Melder 3 erhält Adresse "03" |
| 10000000 | -- |
| 01000000 | 4 □ Melder 4 erhält Adresse "04" |

Die drei Elemente werden hier nach 6 Abfragen gefunden.

Bei vollständiger Durchführung der sukzessiven Approximation wären hier 24 notwendig!

## Patentansprüche

1. Bus mit einem Master (10) und wenigstens einem Slave (1 bis 7), wobei die Slaves (1 bis 7) parallel und/oder seriell miteinander verbindbar sind, wobei jedem Slave (1 bis 7) eine Seriennummer zugeordnet ist, wobei der Master (10) derart konfiguriert ist, dass in einer Initialisierungsphase der Master (10) anhand der wenigstens einen Seriennummer eine Adressierung des wenigstens einen Slaves (1 bis 7) durchführt, **dadurch gekennzeichnet, dass** der Master (10) Mittel aufweist, um die Adressierung durch Identifizierung wenigstens eines Teilmerkmals der Seriennummer durchzuführen, wobei der Master (10) derart konfiguriert ist, dass der Master (10) als das wenigstens eine Teilmerkmal eine Zahl in der jeweiligen Seriennummer identifiziert, wobei der wenigstens eine Slave (1 bis 7) einen Schalter aufweist, den der wenigstens eine Slave (1 bis 7) nach erfolgter Adressierung durchschaltet.

2. Bus nach Anspruch 1, **dadurch gekennzeichnet, dass** der Master derart konfiguriert ist, dass der Master (10) nur die Adresse an den jeweiligen Slave (1 bis 7) vergibt, wenn bei einer Frage des Masters nach dem wenigstens einen Teilmerkmal an den wenigstens einen Slave (1 bis 7) nur ein Slave antwortet.

3. Bus nach einem der vorhergehenden Ansprüche, **dadurch gekennzeichnet, dass** die Größe des wenigstens einen Teilmerkmals zwischen 1 Bit und 4 Byte liegt.

4. Bus nach einem der vorhergehenden Ansprüche, **dadurch gekennzeichnet, dass** nach erfolgter Adressierung des wenigstens einen Slaves (1 bis 7) die Seriennummer vom Master (10) auslesbar ist.

5. Bus nach einem der vorhergehenden Ansprüche, **dadurch gekennzeichnet, dass** der Master (10) derart konfiguriert ist, dass der Master (10) bei der Adressierung die sukzessive Approximation durchführt.

## Claims

1. Bus having a master (10) and having at least one slave (1 to 7), in which case the slaves (1 to 7) can be connected to one another in parallel and/or in series, with a serial number being allocated to each slave (1 to 7), and the master (10) being configured in such a manner that, in an initialization phase, the master (10) addresses the at least one slave (1 to 7) on the basis of the at least one serial number, **characterized in that** the master (10) has means in order to carry out the addressing process by identification of at least one sub-feature of the serial number, with the master (10) being configured in such a manner that the master (10) identifies a number in the respective serial number as the at least one sub-feature, with the at least one slave (1 to 7) having a switch which switches through the at least one slave (1 to 7) after the addressing process has been carried out.

2. Bus according to Claim 1, **characterized in that** the master is configured in such a manner that the master (10) allocates the address to the respective slave (1 to 7) only when only one slave responds to a check by the master for the at least one sub-feature at the at least one slave (1 to 7).

3. Bus according to one of the preceding claims, **characterized in that** the size of the at least one sub-feature is between 1 bit and 4 bytes.

4. Bus according to one of the preceding claims, **characterized in that** once the at least one slave (1 to 7) has been addressed, the serial number can be read by the master (10).

5. Bus according to one of the preceding claims, **characterized in that** the master (10) is configured in such a manner that the master (10) carries out successive approximation during the addressing process.

## Revendications

1. Bus comprenant un maître (10) et au moins un esclave (1 à 7), dans lequel les esclaves (1 à 7) peuvent être reliés les uns aux autres en parallèle et/ou en série, un numéro de série étant affecté à chaque esclave (1 à 7), et le maître (10) étant configuré pour effectuer un adressage d'au moins un esclave (1 à 7) à l'aide d'au moins un numéro de série au cours d'une phase d'initialisation,
**caractérisé en ce que**
le maître (10) présente des moyens pour effectuer l'adressage par une identification d'au moins une caractéristique partielle du numéro de série, le maître (10) étant configuré pour identifier comme au moins une caractéristique partielle un chiffre dans le numéro de série respectif, et au moins un esclave (1 à 7) présente un commutateur qui est commuté par au moins un esclave (1 à 7) après l'adressage.

2. Bus selon la revendication 1,
**caractérisé en ce que**
le maître (10) n'attribuer l'adresse à l'esclave (1 à 7) que si, à une question du maître concernant au moins une caractéristique partielle adressée à au moins un esclave (1 à 7), un seul esclave répond.

3. Bus selon l'une quelconque des revendications précédentes,
**caractérisé en ce que**
la grandeur d'au moins une caractéristique partielle se situe entre 1 bit et 4 octets.

4. Bus selon l'une quelconque des revendications précédentes,
**caractérisé en ce qu'**
le numéro de série peut être lu par le maître (10) après l'adressage d'au moins un esclave (1 à 7).

5. Bus selon l'une quelconque des revendications précédentes,
**caractérisé en ce que**
le maître (10) est configuré pour effectuer lors de l'adressage l'approximation successive.
